# EUROPEAN PATENT SPECIFICATION

(11) **EP 3 730 411 B1**
(45) Date of publication and mention of the grant of the patent: **01.11.2023**
(21) Application number: 20169311.6
(22) Date of filing: 14.04.2020
(51) Int. Cl.: B64G 1/28, F16F 15/30, F16F 15/315

(54) **A SUPPORT FRAME OF REACTION FLYWHEEL**
TRAGRAHMEN EINES REAKTIONSSCHWUNGRADES
CADRE DE SUPPORT DE VOLANT D'INERTIE À RÉACTION

(30) Priority: 22.04.2019 CN 201910322272; 22.04.2019 CN 201920546691 U; 22.04.2019 CN 201920546801 U
(43) Date of publication of application: 28.10.2020
(73) Proprietor: HUNAN LANYUE Mechanical and Electrical Technology Co., Ltd., Changsha City Hunan 410000 (CN)
(72) Inventor: DU, Jinbang, Changsha City, Hunan 410000 (CN); HOU, Jianjun, Changsha City, Hunan 410000 (CN); WANG, Jianmin, Changsha City, Hunan 410000 (CN); YANG, Xiaohui, Changsha City, Hunan 410000 (CN)
(74) Representative: López Camba, Emilia

(56) References cited:
- EP-A1- 2 399 831
- CN-U- 207 281 595
- DE-U1-202009 012 126
- US-A1- 2016 341 273

## Description

### Technical Field

The present invention relates to the technical field of aerospace, and particularly to a reaction flywheel comprising a base, a support frame, a motor, a rotor, a control assembly, wherein the reaction flywheel is mainly used to absorb the vibration produced by the motor in the working process.

### Background of the Invention

The attitude control actuators of satellites, earth observation platforms, spacecraft, space telescopes and other spacecraft require small size, light weight, long life, low power consumption and high reliability. At present, the support frame of reaction flywheel, which is the actuator of spacecraft attitude control system, is generally supported by mechanical bearing. The mechanical bearing has problems, such as uncontrollable unbalanced vibration, and large zero-crossing friction torque and so on, which seriously affects the service life of reaction flywheel and the accuracy and stability of spacecraft attitude control.

In order to solve the problem that reaction flywheel vibrates in the working process, it is usually improved on the bracket of reaction flywheel. For example, Chinese patent application No. CN201610058940.5, the title is the micro vibration active passive integrated vibration isolation device of reaction flywheel, which includes: an upper cover plate on which reaction flywheel is mounted, a plurality of supporting units for vibration isolation and a lower bottom plate for connecting with a spacecraft cabin plate. The supporting unit is a U-shaped body. The supporting unit includes a bending part, and piezoelectric materials are respectively aligned on the two opposite side walls of each bending part. In this way, the weight and volume of the satellite will be greatly increased, and the manufacturing difficulty will also be increased.

German patent DE202009012126U1, disclosed a frame (5,6) of reaction flywheel, which is used on the reaction wheel to limit the movement of a revolving mass 1, a rigid edge area 5 is fixed on the shell as a bearing, and a flexible inner area 6 is used for recording the motor. Although this structural design can reduce the vibration of reaction wheel, it is realized by limiting the movement of a revolving mass 1, which affects the normal rotation of reaction flywheel rotor.

### Contents of the Invention

The technical problem addressed by the present invention is to overcome the deficiency in the prior art, and to provide a support frame of reaction flywheel, which can not only reduce the vibration, but also reduce the overall weight of the support frame of the reaction flywheel, and the manufacture is relatively easy.

The technical solution of the present invention is set out in the appended set of claims.

In the present invention, the motor is fixedly installed on the support frame and there is a space between the motor and the base. The motor shaft is inserted into the center hole, the rotor is fixedly installed on the motor shaft, and the motor drives the rotor to rotate. Therefore, the support frame works as the main bearing structure of the motor, and the manufacture is relatively easy.

The support frame is an elastic support frame. Therefore, the support frame is a shock absorption design, which effectively reduce the vibration produced in the working process of the motor.

The support frame is inverted U-shaped and is provided with a center hole, which reduces the overall weight of the support frame of the reaction flywheel.

### Description of the Drawings

Fig.1 is a schematic diagram of a support frame of the reaction flywheel according to the present invention.
Fig.2 is a perspective view of one embodiment of a support frame of the reaction flywheel according to the present invention.
Fig.3 is a perspective view of another embodiment of a support frame of the reaction flywheel according to the present invention.

### Description of the Preferred Embodiments

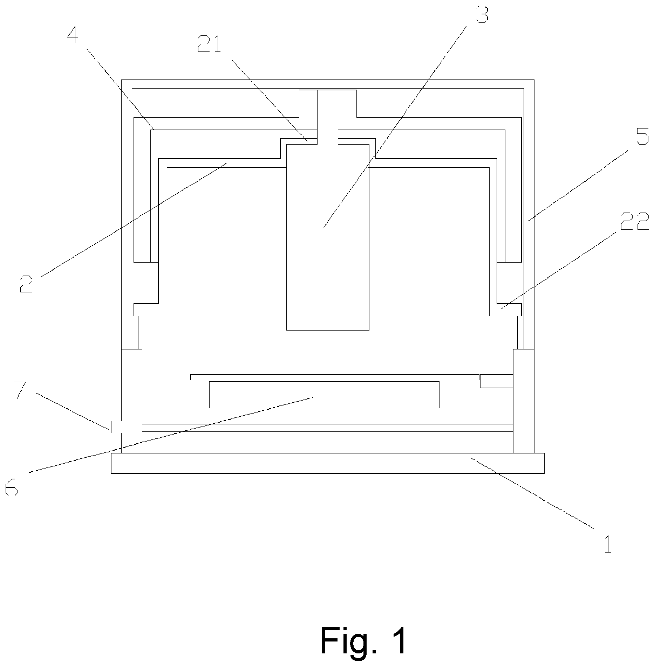

As shown as Fig. 1, in this support frame of reaction flywheel, reaction flywheel includes: a base 1, a support frame 2, a motor 3, a rotor 4, a control assembly 6.

The control assembly 6 for controlling the speed of the motor is mounted on the base. The support frame 2 is installed above the base. The support frame is an inverted U-shaped elastic support frame. The motor is installed in a hollow space in the support frame. The top of the support frame is provided with a center hole. The motor 3 is fixedly installed on the support frame and there is a space between the motor and the base. The motor shaft is inserted into the center hole, the rotor 4 is fixedly installed on the motor shaft, and the motor drives the rotor to rotate.

In the present invention, the motor is fixedly installed on the support frame and there is a space between the motor and the base. The motor shaft is inserted into the center hole, the rotor is fixedly installed on the motor shaft, and the motor drives the rotor to rotate. Therefore, the support frame works as the main bearing structure of the motor, and the manufacture is relatively easy.

The support frame is an elastic support frame. Therefore, the support frame is a shock absorption design, which effectively reduce the vibration produced in the working process of the motor.

The support frame is inverted U-shaped and is provided with a center hole, which reduces the overall weight of the support frame of the reaction flywheel.

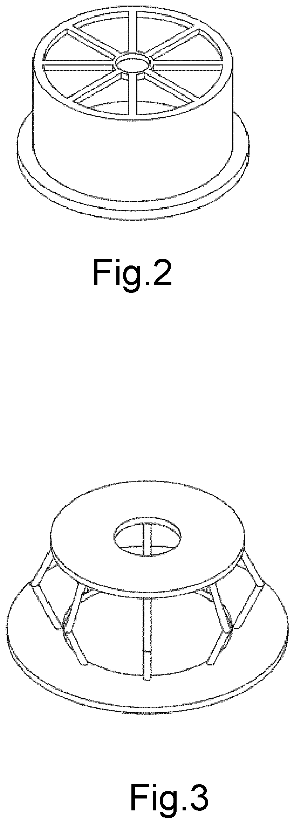

Preferably, as shown as Fig. 2, the top of the support frame 2 is a hollow structure. This can greatly reduce the overall weight of the reaction flywheel and has no impact on the shock absorption.

For example, as shown as Fig. 2, the support frame 2 is an inverted U-shaped cylinder, which comprises a side wall and a top, the top of which is provided with a center hole and a plurality of connecting rods. The main body of the motor is installed in the side wall, the motor shaft of the motor is inserted into the center hole, and the connecting rods are radially arranged around the center hole. The number of connecting rods is 8.

Preferably, as shown as Fig.3, the side wall of the support frame 2 has a hollow structure. This further reduces the overall weight of the reaction flywheel.

For example, as shown as Fig.3, the support frame 2 comprises an upper circular plate and a lower circular plate. The upper circular plate has a central hole, and the lower circular plate has a correspond through hole. The main body of the motor is installed in the space sandwiched between the upper circular plate and the lower circular plate. The motor shaft of the motor is inserted into the central hole. The upper circular plate and the lower circular plate are connected with several bent bars. The side wall of the support frame is designed with a hollow structure to reduce weight, which is especially suitable for small reaction flywheel. Because the top of the small reaction flywheels is very small, it cannot be designed as a hollow structure to reduce weight. The diameter of the upper circular plate is smaller than the diameter of the lower circular plate, which reduce the center of mass of the support and increase the stability of the support. The diameter of the center hole is smaller than the diameter of the through hole, which makes it easy for the motor to pass through. The bending bars are evenly distributed, and each bending bar is bent. This design makes manufacture easy. In other words, the bending bar can be curved, so that the vibration from the support frame is transmitted to the motor after a longer time and a longer distance, reducing the vibration impact on the motor. The number of bending bars is 8. This kind of structure is relatively stable and better resist vibration. Of course, other number of bending bars can be set as long as the structural stability can be ensured. Obviously, the fewer the number of bending bars, the lighter the weight of the support frame, but on the premise of ensuring the stability of the structure.

Preferably, as shown as Fig. 1, the bottom of the support frame 2 is provided with an outer flange edge 22. This design can reduce the center of mass of the support frame and increase the stability of the support frame when it works.

Preferably, as shown as Fig. 1, the top of the support frame 2 is provided with a rim 21, and the outer wall of the motor is in contact with the inner wall of the rim. In this way, the main part of the motor can be better clamped at the rim, and the installation is firm and stable.

Furthermore, the longitudinal section of the rim is a cylinder or a truncated cone. Of course, the rim can also adopt other shapes, which are mainly determined by the type and power of the motor.

Preferably, the top of the support frame 2 has a recess, and the outer wall of the motor is in contact with the inner wall of the recess. In this way, the main part of the motor can be better clamped at the rim, and the center is lower, so that the installation is firm and stable.

Furthermore, the longitudinal section of the recess is a cylinder or an inverted truncated cone. Of course, the recess can also be of other shapes, which are mainly determined by the type and power of the motor.

Preferably, an elastic support plate is arranged in the middle of the support frame 2, and an opening is arranged in the middle of the elastic support plate for the motor to pass through. Adding a layer of elastic support plate fixes the motor more firmly and reduce the vibration produced in the working process of the motor more effectively.

Preferably, the reaction flywheel also comprises a shell cover 5 and an electric connector 7. The electric connector 7 is installed on the base and connected with the control assembly. The shell cover 5 is covered outside the support frame and installed on the base. The shell cover prevents the impurities such as dust from entering the reaction flywheel and causing the rotor speed to drop or even not work. The electric connector can make the control component connect with the outside to control the motor work better.

## Claims

1. Reaction flywheel comprising a base (1), a support frame (2), a motor (3), a rotor (4) and a control assembly (6) for controlling the speed of the motor; wherein the support frame (2) is installed above the base; the support frame is an inverted U-shaped elastic support frame; the motor is installed within the support frame; the top of the support frame is provided with a center hole; the motor (3) is fixedly installed within the support frame, wherein there is a space between the motor and the base; the motor shaft is inserted into the center hole, the rotor (4) is fixedly installed on the motor shaft, and the motor drives the rotor to rotate; **characterized in that** the control assembly (6) for controlling the speed of the motor is mounted on the base.

2. The reaction flywheel according to claim 1, **characterized in that** the support frame (2) is an inverted U-shaped cylinder, which comprises a side wall and a top, wherein the top is a hollow structure and is provided with the center hole and a plurality of connecting rods, wherein the connecting rods are radially arranged around the center hole.

3. The reaction flywheel according to claim 2, **characterized in that** the number of connecting rods is 8.

4. The reaction flywheel according to claim 1, **characterized in that** the support frame (2) comprises an upper circular plate and a lower circular plate; the upper circular plate has the central hole, and the lower circular plate has a corresponding through hole; a main body of the motor is installed in the space between the upper circular plate and the lower circular plate; the motor shaft of the motor is inserted into the central hole; a side wall of the support frame (2) has a hollow structure, wherein the upper circular plate and the lower circular plate are connected with several bending bars.

5. The reaction flywheel according to claim 4, **characterized in that** the bending bars are evenly distributed, and each bending bar is bent.

6. The reaction flywheel according to claim 5, **characterized in that** the number of bending bars is 8.

7. The reaction flywheel according to claim 1, **characterized in that** the bottom of the support frame (2) is provided with an outer flange edge (22).

8. The reaction flywheel according to claim 7, **characterized in that** the top of the support frame (2) is provided with a rim (21), and an outer wall of the motor is in contact with an inner wall of the rim.

9. The reaction flywheel according to claim 8, **characterized in that** a longitudinal section of the rim is a cylinder or a truncated cone.

10. The reaction flywheel according to claim 8, **characterized in that** the top of the support frame (2) has a recess, and the outer wall of the motor is in contact with the inner wall of the recess.

11. The reaction flywheel according to claim 10, **characterized in that** a longitudinal section of the recess is a cylinder or an inverted truncated cone.

12. The reaction flywheel according to claim 1, **characterized in that** an elastic support plate is arranged in the middle of the support frame (2), and an opening is arranged in the middle of the elastic support plate for the motor to pass through.

13. The reaction flywheel according to any one of claims 1-12, **characterized in that** the reaction flywheel also comprises a shell cover (5) and an electric connector (7); wherein the electric connector (7) is installed on the base and connected with the control assembly; the shell cover (5) is outside the support frame and installed on the base.

## Patentansprüche

1. Reaktionsschwungrad mit einer Basis (1), einem Tragrahmen (2), einem Motor (3), einem Rotor (4) und einer Steuereinheit (6) zur Steuerung der Motordrehzahl; wobei der Tragrahmen (2) über der Basis installiert ist; der Tragrahmen ein umgekehrter U-förmiger elastischer Tragrahmen ist; der Motor innerhalb des Tragrahmens installiert ist; die Oberseite des Tragrahmens mit einem Mittelloch versehen ist; der Motor (3) fest in den Tragrahmen eingebaut ist, wobei sich zwischen dem Motor und der Basis ein Zwischenraum befindet; die Motorwelle in das Mittelloch eingeführt ist, der Rotor (4) fest auf der Motorwelle installiert ist und der Motor den Rotor zum Drehen antreibt; **dadurch gekennzeichnet, dass** die Steuerbaugruppe (6) zur Steuerung der Motordrehzahl an der Basis angebracht ist.

2. Das Reaktionsschwungrad nach Anspruch 1, **dadurch gekennzeichnet, dass** der Tragrahmen (2) ein umgekehrter U-förmiger Zylinder ist, der eine Seitenwand und ein Oberteil umfasst, wobei das Oberteil eine hohle Struktur ist und mit dem Mittelloch und einer Vielzahl von Verbindungsstangen versehen ist, wobei die Verbindungsstangen radial um das Mittelloch angeordnet sind.

3. Das Reaktionsschwungrad nach Anspruch 2, **dadurch gekennzeichnet, dass** die Anzahl der Verbindungsstangen 8 beträgt.

4. Das Reaktionsschwungrad nach Anspruch 1, **dadurch gekennzeichnet, dass** der Tragrahmen (2) eine obere kreisförmige Platte und eine untere kreisförmige Platte umfasst; die obere kreisförmige Platte ein Mittelloch und die untere kreisförmige Platte ein entsprechendes Durchgangsloch aufweist;
ein Hauptkörper des Motors in dem Raum zwischen der oberen kreisförmigen Platte und der unteren kreisförmigen Platte installiert ist; die Motorwelle des Motors in das Mittelloch eingeführt ist; eine Seitenwand des Tragrahmens (2) eine hohle Struktur aufweist, wobei
die obere kreisförmige Platte und die untere kreisförmige Platte mit mehreren Biegestäben verbunden sind.

5. Das Reaktionsschwungrad nach Anspruch 4, **dadurch gekennzeichnet, dass** die Biegestäbe gleichmäßig verteilt sind und jeder Biegestab gebogen ist.

6. Das Reaktionsschwungrad nach Anspruch 5, **dadurch gekennzeichnet, dass** die Anzahl der Biegestäbe 8 beträgt.

7. Das Reaktionsschwungrad nach Anspruch 1, **dadurch gekennzeichnet, dass** der Boden des Tragrahmens (2) mit einer äußeren Flanschkante (22) versehen ist.

8. Das Reaktionsschwungrad nach Anspruch 7, **dadurch gekennzeichnet, dass** die Oberseite des Tragrahmens (2) mit einer Felge (21) versehen ist und eine Außenwand des Motors mit einer Innenwand der Felge in Kontakt ist.

9. Das Reaktionsschwungrad nach Anspruch 8, **dadurch gekennzeichnet, dass** ein Längsschnitt der Felge ein Zylinder oder ein Kegelstumpf ist.

10. Das Reaktionsschwungrad nach Anspruch 8, **dadurch gekennzeichnet, dass** die Oberseite des Tragrahmens (2) eine Aussparung aufweist und die Außenwand des Motors in Kontakt mit der Innenwand der Aussparung steht.

11. Das Reaktionsschwungrad nach Anspruch 10, **dadurch gekennzeichnet, dass** ein Längsschnitt der Aussparung ein Zylinder oder ein umgekehrter Kegelstumpf ist.

12. Das Reaktionsschwungrad nach Anspruch 1, **dadurch gekennzeichnet, dass** in der Mitte des Tragrahmens (2) eine elastische Stützplatte angeordnet ist und in der Mitte der elastischen Stützplatte eine Öffnung für den Durchgang des Motors angeordnet ist.

13. Das Reaktionsschwungrad nach einem der Ansprüche 1 bis 12, **dadurch gekennzeichnet, dass** das Reaktionsschwungrad auch einen Gehäusedeckel (5) und einen elektrischen Verbinder (7) umfasst; wobei der elektrische Verbinder (7) an der Basis installiert und mit der Steuereinheit verbunden ist; der Gehäusedeckel (5) befindet sich außerhalb des Stützrahmens und ist an der Basis installiert.

## Revendications

1. Volant de réaction comprenant une base (1), un cadre de support (2), un moteur (3), un rotor (4) et un ensemble de commande (6) pour contrôler la vitesse du moteur ; dans lequel le cadre de support (2) est installé au-dessus de la base ; le cadre de support est un cadre de support élastique en forme de U inversé ; le moteur est installé à l'intérieur du cadre de support ; le haut du cadre de support est pourvu d'un trou central ; le moteur (3) est fixé à l'intérieur du cadre de support, dans lequel il y a un espace entre le moteur et la base ; l'arbre du moteur est inséré dans le trou central, le rotor (4) est fixé sur l'arbre de moteur, et le moteur entraîne le rotor à tourner ; **caractérisé en ce que** l'ensemble de commande (6) pour contrôler la vitesse du moteur est monté sur la base.

2. Volant d'inertie à réaction selon la revendication 1, **caractérisé en ce que** le cadre de support (2) est un cylindre en forme de U inversé, qui comprend une paroi latérale et un sommet, dans lequel le sommet est une structure creuse et est pourvu du trou central et d'une pluralité de bielles, dans lequel les bielles sont agencées radialement autour du trou central.

3. Volant de réaction selon la revendication 2, **caractérisé en ce que** le nombre de bielles est de 8.

4. Volant de réaction selon la revendication 1, **caractérisé en ce que** le cadre de support (2) comprend une plaque circulaire supérieure et une plaque circulaire inférieure ; la plaque circulaire supérieure a le trou central et la plaque circulaire inférieure a un trou traversant correspondant ;
un corps principal du moteur est installé dans l'espace entre la plaque circulaire supérieure et la plaque circulaire inférieure ; l'arbre du moteur est inséré dans le trou central, une paroi latérale du cadre de support (2) a une structure creuse, dans laquelle la plaque circulaire supérieure et la plaque circulaire inférieure sont reliées par plusieurs barres de pliage.

5. Le volant de réaction selon la revendication 4, **caractérisé en ce que** les barres de flexion sont uniformément réparties, et chaque barre de flexion est pliée.

6. Le volant de réaction selon la revendication 5, **caractérisé en ce que** le nombre de barres de flexion est de 8.

7. Volant d'inertie à réaction selon la revendication 1, **caractérisé en ce que** le fond du cadre de support (2) est pourvu d'un bord de bride externe (22).

8. Volant d'inertie à réaction selon la revendication 7, **caractérisé en ce que** le sommet du cadre de support (2) est pourvu d'un rebord (21), et une paroi externe du moteur est en contact avec une paroi interne du rebord.

9. Volant de réaction selon la revendication 8, **caractérisé en ce qu'**une section longitudinale du rebord est un cylindre ou un cône tronqué.

10. Volant de réaction selon la revendication 8, **caractérisé en ce que** le sommet du cadre de support (2) comporte un évidement, et la paroi externe du moteur est en contact avec la paroi interne de l'évidement.

11. Volant de réaction selon la revendication 10, **caractérisé en ce qu'**une section longitudinale de l'évidement est un cylindre ou un cône tronqué inversé.

12. Volant d'inertie à réaction selon la revendication 1, **caractérisé en ce qu'**une plaque de support élastique est agencée au milieu du cadre de support (2), et une ouverture est agencée au milieu de la plaque de support élastique pour le passage du moteur.

13. Volant d'inertie à réaction selon l'une quelconque des revendications 1 à 12, **caractérisé en ce que** le volant d'inertie à réaction comprend également un couvercle de coque (5) et un connecteur électrique (7) ; dans lequel le connecteur électrique (7) est installé sur la base et connecté à l'ensemble de commande ; le couvercle de coque (5) est à l'extérieur du cadre de support et installé sur la base.
